(19) **Europäisches Patentamt / European Patent Office / Office européen des brevets**

(11) **EP 4 770 007 A1**

(12) # EUROPEAN PATENT APPLICATION

(43) Date of publication:
01.07.2026 Bulletin 2026/27

(21) Application number: 25227161.4

(22) Date of filing: 24.12.2025

(51) International Patent Classification (IPC):
*H04L 9/32* (2006.01)

(52) Cooperative Patent Classification (CPC):
H04L 9/3226

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 26.12.2024 CN 202411942154

(71) Applicant: Truffle Labs Inc.
Middletown, DE 19709 (US)

(72) Inventors:
• LIN, Zifeng
Shenzhen City (CN)
• ZHENG, Pengyang
Shenzhen City (CN)

(74) Representative: Chung, Hoi Kan
Mandarin IP Limited
7 Cherry Trees
Great Shelford
Cambridge CB22 5XA (GB)

(54) **ANTI-COUNTERFEITING AUTHENTICATION SYSTEM FOR ELECTRONIC CIGARETTE CARTRIDGE BASED ON ENCRYPTION TECHNOLOGY**

(57) The present invention relates to the technical field of electronic cigarette cartridge authentication, in particular to an anti-counterfeiting authentication system for an electronic cigarette cartridge based on an encryption technology, which includes an authentication parameter capturing module, a cigarette rod data transmission module, a contact connection verification module and a key activation control module. According to the present invention, through dynamic data extraction and grouping processing of an identification code and an encryption key, the security and uniqueness of identification information are improved, the circulation risk of counterfeit products is avoided, associated values of the combination of dynamic authentication identifiers and the identification code is calculated and stored, the dynamic update and traceability of authentication data are achieved, and the reliability and tamper resistance of parameters are enhanced; a unibus protocol is used to realize efficient transmission and real-time comparison of dynamic data, improve the accuracy and rapidity of comparison.

FIG. 1

**EP 4 770 007 A1**

**Description**

<u>TECHNICAL FIELD</u>

The present invention relates to the technical field of electronic cigarette cartridge authentication, in particular, to an anti-counterfeiting authentication system for an electronic cigarette cartridge based on an encryption technology.

<u>BACKGROUND</u>

The technical field of electronic cigarette cartridge authentication aims to identify and verify the authenticity, uniqueness and reliability of electronic cigarette cartridges by means of various technical means. Common authentication methods include a barcode and QR code technology, a radio frequency identification (RFID) technology, an image recognition technology, a physical feature-based authentication technology, a chemical feature-based authentication technology, and a biological feature-based authentication technology, all of which have their own unique characteristics. The applications of such technologies in this field have played important roles in ensuring product authenticity, regulating market order and protecting consumer rights and interests. However, there is still room for improvement in safety, stability and applicability.

An anti-counterfeiting authentication system for an electronic cigarette cartridge is an innovative authentication method that verifies the anti-counterfeiting performance and authenticity of electronic cigarette cartridges through a cryptographic identification technology. This system is used to effectively deal with the problem of the proliferation of counterfeit and shoddy cigarette cartridges in the market, improve the safety and credibility of cigarette cartridges, protect consumer rights and interests, and standardize channel management at the same time to promote the healthy and orderly development of the electronic cigarette market. This authentication method integrates the high security of an encryption technology with the convenience of an identification technology, providing an efficient and reliable solution for the electronic cigarette industry.

The prior art generally has the problems of insufficient safety, stability and applicability in the authentication of electronic cigarette cartridges. The barcode and QR code technology has the advantages of simple operation and low cost, but lacks encryption protection capabilities and cannot effectively prevent counterfeit and shoddy products from entering the market because identification information is easy to be counterfeited. The RFID technology has high recognition efficiency, but is limited in economical efficiency in a wide range of applications due to high hardware cost. The physical feature-based or chemical feature-based authentication technology is highly resistant to counterfeiting, but the measurement accuracy is limited by the consistency in the environment and devices, resulting in poor stability in different scenarios. The image recognition technology has a high degree of automation, but recognition results are easily disturbed by ambient light and pattern damages, which reduces the reliability of the system. The biological feature-based technology is more difficult to popularize on a large scale due to the complexity and high cost, such that the prior art has great limitations in tracing product production and circulation information, protecting consumer rights and interests, and standardizing market order, which are not enough to support the comprehensive development of the electronic cigarette industry and the goal of market health.

<u>SUMMARY</u>

An objective of the present invention is to overcome the defects of the prior art and to provide an anti-counterfeiting authentication system for an electronic cigarette cartridge based on an encryption technology.

To fulfill said objective, the present invention adopts the following technical solution: an anti-counterfeiting authentication system for an electronic cigarette cartridge based on an encryption technology includes:

an authentication parameter capturing module, configured to, based on an identification code and an encryption key of a BM1A01 chip, extract check parameters and dynamic authentication identifiers for sorting and grouping operations, acquire initial authentication data, and perform associated value calculation and storage by combining the dynamic authentication identifiers with the identification code to acquire a dynamic authentication parameter set;

a cigarette rod data transmission module, configured to, based on the dynamic authentication parameter set, transmit authentication data to a cigarette rod device using a unibus protocol, call a cigarette rod pre-storage template and compare the template with received data, screen a comparison result and associate the comparison result with the dynamic authentication identifiers, generate an authentication comparison record, check the data integrity and mark abnormal items, extract authentication elements for classification processing, and generate an interaction state of electronic cigarette cartridge authentication;

a contact connection authentication module, configured to, based on the interaction state of electronic cigarette cartridge authentication, extract electronic cigarette cartridge authentication data, check signal stability values and match the signal stability values with current parameters, screen abnormal fluctuation points to obtain a contact integrity record, and record a correlation with a device state to form a contact connection health state result; and a key activation control module, configured to, based on the contact connection health state result, decrypt state identifiers and the dynamic authentication identifiers, perform matching check on a parsing result and an authentication template, calculate an activation value in combination with a key of the cigarette rod device and transmit the activation value through a signal channel, and generate an anti-counterfeiting authentication result of a cigarette cartridge activation state.

As a further solution of the present invention, the step of acquiring the initial authentication data specifically includes:

performing, based on the identification code and the encryption key of the BM1A01 chip, a segmentation operation and binary encryption in sequence on the identification code, performing an arithmetic operation on the encryption key and the segmented identification code, recording a segmentation index, verifying a correlation between the identification code and the encryption key, and generating verified encryption feature parameters;
performing, based on the verified encryption feature parameters, segmented parity sorting, and after each segment is grouped, analyzing a weight matching relationship between groups and the encryption key using a formula:

$$S_k = \sum_{i=1}^{n} \left( F_i \cdot K_i + \frac{|W_i|}{P_i} \right);$$

acquiring sorted feature group values;
in which, $S_k$ represents the sorted feature group values, $F_i$ represents segment values of the encryption feature parameters, $K_i$ is a corresponding component of the encryption key, $W_i$ is a difference weight between the encryption feature parameter and the key, $P_i$ is a segmented parity weight index, and n represents a total number of encryption keys; and
performing, based on the sorted feature group values, a multi-layer nested matching operation with dynamic authentication identifier values, updating a dynamic identifier index according to a comparison result and then performing a combination operation, and merging the dynamic identifiers and feature groups to acquire the initial authentication data.

As a further solution of the present invention, the step of acquiring the dynamic authentication parameter set specifically includes:

extracting a numerical range and a character sequence based on the initial authentication data and the dynamic authentication identifiers, parsing timestamps and state identifiers in the dynamic authentication identifiers, matching the timestamps and the state identifiers in the same dimension, and generating a numerical correspondence table;
extracting character index information in the identification code based on the numerical correspondence table, parsing a numerical interval in a hierarchical structure of the identification code, calculating a weighted value with data in the numerical correspondence table in order, and performing normalization processing to acquire a weighted normalized parameter set; and
calling parameter data in the parameter set based on the weighted normalized parameter set, performing grouping aggregation on high-frequency numerical parts, performing sorting according to set priorities, merging the sorted parameter data, and generating the dynamic authentication parameter set.

As a further solution of the present invention, the step of acquiring the authentication comparison record specifically includes:

extracting a complete data packet from a unibus protocol transmission configuration based on the dynamic authentication parameter set, parsing each set of data into a binary sequence according to a fixed frame structure, calling relevant parameters in the cigarette rod pre-storage template, performing bitwise segmented matching on the binary sequence, recording a result of each matching and a matching index location, and generating a preliminary matching analysis result;
corresponding comparison results of transmitted data to the dynamic authentication identifiers item by item based on the preliminary matching analysis result, calculating deviation values between the transmitted data and the dynamic authentication identifiers according to deviations using a formula:

$$R_m = \sqrt{\sum_{j=1}^{m} \left( \frac{|D_j - T_j|}{B_j} + \frac{A_j}{Z_j} \right)^2};$$

calculating a weighted deviation value between each set of parameters, screening matched data according to the deviation values, and generating a dynamic comparison result;

in which, $R_m$ represents the weighted deviation value between parameters, $D_j$ is a comparison value of received parameters, $T_j$ is a reference parameter value of the dynamic authentication identifier, $B_j$ is a weight parameter of a comparison group, $A_j$ is a comparison index bit identifier value, $Z_j$ is an adjustment coefficient of a dynamic comparison group, and m represents a total number of comparison parameters; and

calling matching parameters from the dynamic comparison result, rearranging matched parameter values and index locations, and recording the arranged data in a dedicated storage area to obtain the authentication comparison record.

As a further solution of the present invention, the step of acquiring the interaction state of electronic cigarette cartridge authentication specifically includes:

comparing field definitions and ranges of data content based on the authentication comparison record, performing an item-by-item matching operation, checking whether a field value of each record meets field requirements, analyzing the field content of each record, performing a comparison operation on the field values and rule ranges, marking abnormal data, and establishing an abnormal data classification result;

extracting authentication field values based on the abnormal data classification result, analyzing classification functions for grouping according to the functions, classifying the field values and checking attributes thereof, and establishing an authentication element classification set; and

mapping functional attributes and a use classification set based on the authentication element classification set, setting the interaction state according to a state transformation rule, integrating classification results of the interaction state, and generating the interaction state of electronic cigarette cartridge authentication.

As a further solution of the present invention, the step of acquiring the contact integrity record specifically includes:

extracting an authentication data stream from the interaction state of electronic cigarette cartridge authentication, measuring a signal stability feature of each data point, screening qualified stable signal points according to a set threshold range, and generating a stable signal feature set;

performing fluctuation analysis on current parameters extracted from the stable signal feature set using a formula:

$$Q = \frac{|C_{max} - C_{min}|}{V + \epsilon \cdot \left( \frac{1}{\sigma} - \tau \right)};$$

calculating an abnormal fluctuation index, and generating an abnormal fluctuation record;

in which, Q represents the abnormal fluctuation index, Cmax represents a maximum value of the current parameter, $C_{min}$ represents a minimum value of the current parameter, V is a baseline value of current change, $\epsilon$ is an adjustment coefficient, $\sigma$ is a standard deviation of current fluctuations, and $\tau$ is an adjustment threshold; and

screening contact data with fluctuation index below a target threshold from the abnormal fluctuation record, performing stability check on the data, and updating the data through check to obtain the contact integrity record.

As a further solution of the present invention, the step of acquiring the contact connection health state result specifically includes:

extracting physical parameter values of contact connection parts based on the contact integrity record, measuring electrical conduction values point by point, recording an interval range of contact resistance values, and performing infrared sampling and segmented calculation on contact temperature distribution to acquire a contact parameter data table;

performing interval segmentation on a switch action frequency based on the contact parameter data table, calling load current values and performing cross-screening and matching with ambient temperature data, mapping dynamic changes of contact parameters, and generating a contact device matching model; and
analyzing a fluctuation law of the electrical conduction values and the contact resistance values based on the contact device matching model, calling a device operation state matching result and evaluating the stability of the contact temperature distribution, extracting parameters and analyzing the connection stability, and generating the contact connection health state result.

As a further solution of the present invention, the step of acquiring the anti-counterfeiting authentication result of the cigarette cartridge activation state specifically includes:

performing data extraction on the state identifiers and the dynamic authentication identifiers based on the contact connection health state result, grouping the extracted state identifiers and dynamic authentication identifiers in sequence, matching stability parameters of the state identifiers and extracting timing information of the dynamic authentication identifiers, and acquiring associated decryption input parameters;
performing step-by-step parsing according to the associated decryption input parameters and in combination with feature values of the authentication template using a formula:

$$Y = \sqrt{\frac{E \cdot \beta}{1 + \gamma \cdot F^2}};$$

analyzing the homogeneity of authentication features and template features, determining a matching degree through a homogeneity index, and generating a matching check record;
in which, Y is the homogeneity index, E is a feature matrix value of the decryption input parameter, $\beta$ is a weight value in the template features, $\gamma$ is a matching check adjustment coefficient, and F is a Euclidean distance between two sets of features; and
calculating a decrypted activation value according to the matching check record and in combination with a key of the cigarette rod device, using the homogeneity index of the check record as a basis for activation determination, transmitting the calculation result through a signal channel and recording an activation process state, and generating the anti-counterfeiting authentication result of the cigarette cartridge activation state.

Compared with the prior art, the present invention has the following advantages and positive effects.

According to the present invention, through the dynamic data extraction and grouping processing of the identification code and the encryption key, the security and uniqueness of identification information are improved significantly; the circulation risk of counterfeit products is avoided; the dynamic update and traceability of authentication data are achieved by introducing the calculation and storage of associated values based on the combination of the dynamic authentication identifiers and the identification code, such that the reliability and tamper resistance of authentication parameters are enhanced; during the data transmission process, a unibus protocol is used to realize efficient transmission of authentication data, effectively improve the accuracy and rapidity of data comparison by means of real-time comparison of the pre-storage module and dynamic data, ensure the comprehensiveness of data integrity check by screening abnormal items and extracting authentication elements, and reduce potential authentication misjudgment risks; during contact connection authentication, abnormal fluctuation points are screened by means of dynamic match of a signal and a current to acquire a stability record of contact states, providing a scientific basis for the reliability of hardware connection in the device; the anti-counterfeiting function of the authentication result is further strengthened by combining key decryption and activation value calculation; and full-link security protection from information collection to authentication transmission is implemented to significantly improve the security, real-time performance and applicability of the entire authentication system, while resource consumption is optimized.

BRIEF DESCRIPTION OF DRAWINGS

FIG. 1 is a flowchart of a system of the present invention;
FIG. 2 is a flowchart of initial authentication data in the present invention;
FIG. 3 is a flowchart of a dynamic authentication parameter set in the present invention;
FIG. 4 is a flowchart of an authentication comparison record in the present invention;
FIG. 5 is a flowchart of an interaction state of electronic cigarette cartridge authentication in the present invention;
FIG. 6 is a flowchart of a contact integrity record in the present invention;

FIG. 7 is a flowchart of a contact connection health state result in the present invention; and
FIG. 8 is a flowchart of an anti-counterfeiting authentication result of an cigarette cartridge activation state in the present invention.

## DETAILED DESCRIPTION OF THE EMBODIMENTS

In order to make the objectives, technical solutions and advantages of the present invention clearer, the following will describe the present invention in detail in conjunction with accompany drawings and embodiments. It should be understood that the specific embodiments described here are only used to explain the present invention, but not used to limit the present invention.

In the description of the present invention, it should be understood that the orientation or location relations indicated via terms of "length", "width", "upper", "lower", "front", "rear", "left", "right", "vertical" "horizontal", "top", "bottom", "inner", "outer", and the like are based on orientation or location relations shown in the drawings only to describe the present invention conveniently and simplify the description, but not indicate or imply that referred apparatuses or elements must have particular orientations or be constructed and operated with the particular orientation, so that they cannot be construed as limiting of the present invention. In addition, in the description of the present invention, unless otherwise stated explicitly and specifically, the term "a plurality of" means two or more.

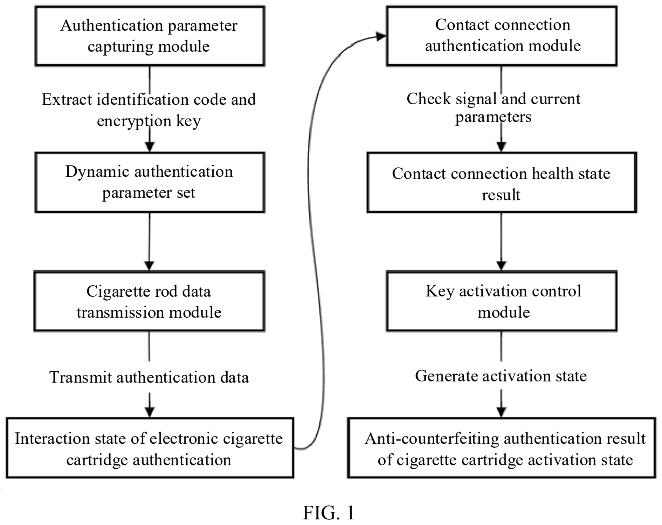

Referring to FIG. 1, an anti-counterfeiting authentication system for an electronic cigarette cartridge based on an encryption technology includes:

an authentication parameter capturing module, configured to, based on an identification code and an encryption key of a BM1A01 chip, extract check parameters and dynamic authentication identifiers for sorting and grouping operations, acquire initial authentication data, and perform associated value calculation and storage by combining the dynamic authentication identifiers with the identification code to acquire a dynamic authentication parameter set;

a cigarette rod data transmission module, configured to, based on the dynamic authentication parameter set, transmit authentication data to a cigarette rod device using a unibus protocol, call a cigarette rod pre-storage template and compare the template with received data, screen a comparison result and associate the comparison result with the dynamic authentication identifiers, generate an authentication comparison record, check the data integrity and mark abnormal items, extract authentication elements for classification processing, and generate an interaction state of electronic cigarette cartridge authentication;

a contact connection authentication module, configured to, based on the interaction state of electronic cigarette cartridge authentication, extract electronic cigarette cartridge authentication data, check signal stability values and match the signal stability values with current parameters, screen abnormal fluctuation points to obtain a contact integrity record, and record a correlation with a device state to form a contact connection health state result; and

a key activation control module, configured to, based on the contact connection health state result, decrypt state identifiers and the dynamic authentication identifiers, perform matching check on a parsing result and an authentication template, calculate an activation value in combination with a key of the cigarette rod device and transmit the activation value through a signal channel, and generate an anti-counterfeiting authentication result of a cigarette cartridge activation state.

The initial authentication data includes check parameters, dynamic authentication identifiers, and the identification code; the dynamic authentication parameter set includes associated values, check parameter groups, and the dynamic authentication identifier set; the authentication comparison record includes comparison results, dynamic authentication identifier association results, and integrity check marks; the interaction state of electronic cigarette cartridge authentication includes authentication elements, classification processing results, and comparison and screening results; the contact integrity record includes signal stability values, current matching parameters, and abnormal fluctuation points; the contact connection health state result includes the contact integrity record, device state association results, and health state identifiers; and the anti-counterfeiting authentication result of the cigarette cartridge activation state includes state identifier decryption values, key activation values, and signal transmission results.

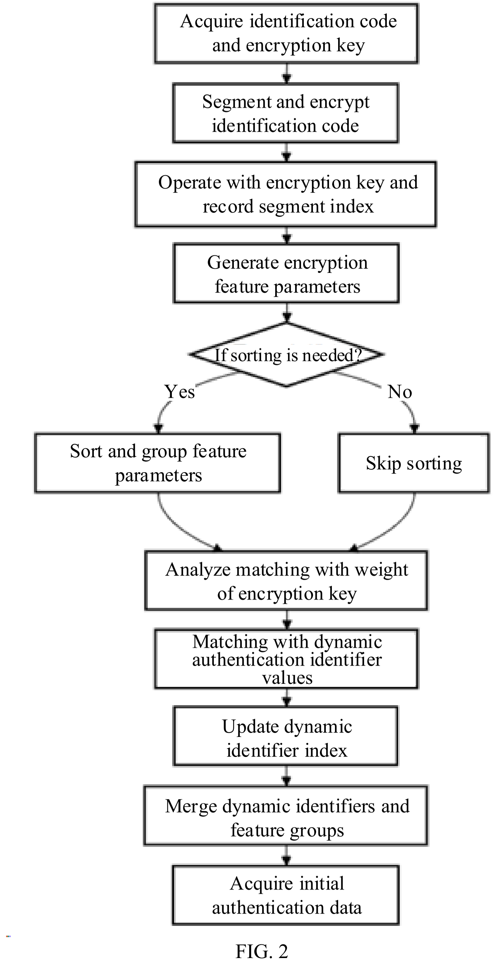

Referring to FIG. 2, the step of acquiring the initial authentication data specifically includes:

performing, based on the identification code and the encryption key of the BM1A01 chip, a segmentation operation and binary encryption in sequence on the identification code, performing an arithmetic operation on the encryption key and the segmented identification code, recording a segmentation index, verifying a correlation between the identification code and the encryption key, and generating verified encryption feature parameters, wherein the identification code is called from the chip based on the identification code and the encryption key of the BM1A01 chip, and then converted into a binary format; the identification code is divided into segments of a fixed length according to a total length of the identification code; a bitwise XOR operation is performed on each segment of data and a corresponding component of the encryption key, and a checksum is calculated for each segment at the same time; the integrity of the segment data in the identification code is verified by means of segment-by-segment check and comparison; if the checksum matching fails, the segments of the identification code are recalled and the XOR operation is re-performed until all the segment checksums are successfully matched with the encryption key; during the matching process, location information of the segments of the identification code and a sequence relationship of segment parameters in the encryption key are recorded, and the results of the XOR operation are stored in order at the same time; finally, the segmentation of the identification code and the verification process of the encryption key are completed to generate verified encryption feature parameters;

performing, based on the verified encryption feature parameters, segmented parity sorting, after each segment is grouped, analyzing a weight matching relationship between groups and the encryption key using a formula:

$$S_k = \sum_{i=1}^{n} \left( F_i \cdot K_i + \frac{|W_i|}{P_i} \right);$$

acquiring sorted feature group values;

in which, $S_k$ represents the sorted feature group values, $F_i$ represents segment values of the encryption feature parameters, $K_i$ is a corresponding component of the encryption key, $W_i$ is a difference weight between the encryption feature parameter and the key, $P_i$ is a segmented parity weight index, and n represents a total number of encryption keys;

this formula has the following benefits: by introducing the difference weight parameter $W_i$ and the parity weight index $P_i$, the dynamic performance and pertinence of feature groups are enhanced, such that the group feature values can more accurately reflect the encryption matching strength between the identification code and the key, providing an accurate basis for subsequent matching authentication;

among the verified encryption feature parameters, the segment values are $F_1 = 8$, $F_2 = 10$ and $F_3 = 6$, the encryption key segment values are $K_1 = 4$, $K_2 = 5$ and $K_3 = 7$, the difference weights are $W_1 = 4$, $W_2 = 5$ and $W_3 = -1$, the parity weights are $P_1 = 2$, $P_2 = 1$ and $P_3 = 2$, and the parameters are sequentially substituted into the following formulas:

calculating a first group feature value: $S_1 = (8 \cdot 4) + \frac{|4|}{2} = 32 + 2 = 34;$

calculating a second group feature value: $S_2 = (10 \cdot 5) + \frac{|5|}{1} = 50 + 5 = 55;$

calculating a third group feature value: $S_3 = (6 \cdot 7) + \frac{|-1|}{2} = 42 + 0.5 = 42.5;$

the final results are group feature values $S_1 = 34,$ $S_2 = 55,$ and $S_3 = 42.5;$

the results show that the calculation accuracy of the group feature values is improved, and the discriminability of the feature groups is enhanced by means of segmented weighting operations, which lays the foundation for the matching of the dynamic authentication identifiers; and

performing, based on the sorted feature group values, a multi-layer nested matching operation with dynamic authentication identifier values, updating a dynamic identifier index according to a comparison result and then performing a combination operation, and merging the dynamic identifiers and feature groups to acquire the initial authentication data, wherein

each group corresponds to the parameters of the dynamic authentication identifiers item by item based on the sorted group feature values; updated values of the parameters in the authentication identifiers are calculated through a matching index rule; an index of the dynamic authentication identifiers is adjusted according to a magnitude order of the feature group values, so as to determine an update sequence of the parameters of the dynamic authentication identifiers; a cumulative difference is calculated step by step in each parameter matching, and stored into a group index corresponding to the dynamic authentication identifiers, while nested adjustment is performed on the dynamic authentication identifiers by taking the group feature values as weights; multi-layer analysis is performed on a correlation index between the adjusted groups and the identifiers to ensure that the updated dynamic authentication identifier has a high correlation with an original encryption feature parameter; and finally, the initial authentication data is obtained from the group feature values and the dynamic authentication identifiers.

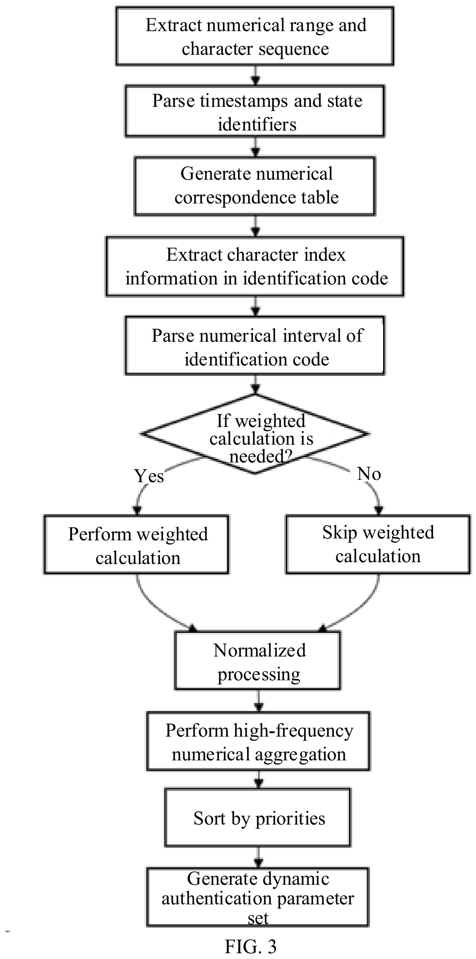

Referring to FIG. 3, the step of acquiring the dynamic authentication parameter set specifically includes:

extracting a numerical range and a character sequence based on the initial authentication data and the dynamic authentication identifiers, parsing a timestamp and a state identifier in each dynamic authentication identifier, matching the timestamps and the state identifiers in the same dimension, and generating a numerical correspondence table, wherein

when the initial authentication data is extracted, the numerical range is acquired first, and subjected to standardized processing by scanning a data interval and identifying its boundary values to ensure that the extracted numerical range may be compared in consistency with subsequent data; the character sequence in the dynamic authentication identifiers is parsed by location, and the timestamps and the state identifiers in the character sequence are extracted; a time format is determined according to the bits of the timestamps for the parsing of the timestamps and converted into a unified time standard, such as UTC time; the state identifiers are extracted based on their locations in the identifiers and labeled as different state categories, such as "Activated", "Locked", and "Expired"; the timestamps and the state identifiers are matched in the same dimension, that is, data from the same time point and state combination is compared with the initial authentication data; a numerical correspondence table is generated by looking up the corresponding numerical range; this table includes matched data for the timestamps and the state identifiers, which are arranged in order to facilitate data processing in subsequent steps, becoming a key data basis in the authentication process for subsequent identification and comparison;

extracting character index information in the identification code based on the numerical correspondence table, parsing a numerical interval in a hierarchical structure of the identification code, calculating a weighted value with data in the numerical correspondence table in order, and performing normalization processing to acquire a weighted normalized parameter set, wherein

the character index information of the identification code is extracted by means of bitwise scanning, mainly focusing on key locations in the character sequence, including high-level characters and low-level characters; the hierarchical structure in the identification code is parsed to determine data intervals of different levels first, including time intervals, state intervals and numerical intervals, etc.,; for the intervals in each hierarchical structure, the corresponding numerical values are extracted and matched with the data in the numerical correspondence table; a weighted value of each interval is calculated based on the matching result, wherein the weight is determined by preset rules or the credibility of the data, for example, high-confidence data is given a higher weight, while low-confidence data is given a lower weight; the calculated weighted values are subjected to normalization processing to ensure that they are within a uniform numerical range (usually between 0 and 1) and avoid inconsistencies caused by different data magnitudes; the normalization process may be completed by subtracting a minimum value from each weighted value and then dividing by the interval range, ensuring that all weighted values are relative and consistent, and obtaining a weighted normalized parameter set that will be used for subsequent analysis and verification; and

calling parameter data in the parameter set based on the weighted normalized parameter set, performing grouping aggregation on high-frequency numerical parts, performing sorting according to set priorities, merging the sorted parameter data, and generating the dynamic authentication parameter set, wherein

high-frequency numerical parts are extracted from the weighted normalized parameter set, wherein the numerical values refer to numerical values that appear repeatedly in the authentication process and have a great impact on the results; through frequency analysis, data that appears at higher frequency are identified and grouped separately, and high-frequency numerical values are aggregated according to their locations or correlations in a data structure to form an aggregation group; and the aggregated data will be further sorted according to set priorities, wherein the priorities are set based on the security, sensitivity or importance of the data to the authentication process; after sorting, the data is merged into a unified data set; during the merging process, it is necessary to ensure the integrity and consistency of the data to avoid conflicts and mismatches between data from different sources; if abnormalities or inconsistencies are found among the data, they need to be corrected through data cleaning or priority adjustment to generate the dynamic authentication parameter set, which will be used for encryption verification or authentication operation to ensure the security and validity of the authentication process.

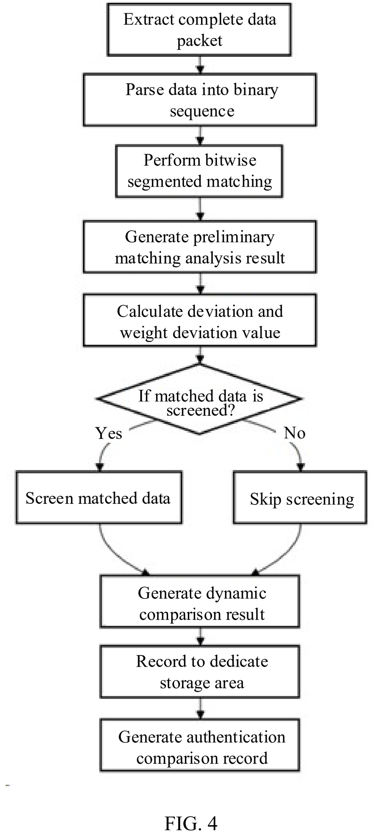

Referring to FIG. 4, the step of acquiring the authentication comparison record specifically includes:

extracting a complete data packet from a unibus protocol transmission configuration based on the dynamic authentication parameter set, parsing each set of data into a binary sequence according to a fixed frame structure, calling relevant parameters in the cigarette rod pre-storage template, performing bitwise segmented matching on the binary sequence, recording a result of each matching and a matching index location, and generating a preliminary matching analysis result, wherein

the completely-transmitted data packet is received first through the unibus protocol transmission configuration, and the transmitted data is parsed according to a predefined frame structure; the parsed data is further converted into a standardized binary sequence, and the data packet content is segmented field by field according to frame structure fields and offset information, while each segment is assigned an independent parameter identifier to ensure the uniqueness of data segments; then, template data pre-stored in the cigarette rod device is called, wherein the template data is composed of a plurality of groups of binary sequences as reference values for comparison; the received segmented binary sequence is bitwise compared with each segment of parameter value in the pre-storage template; in the comparison process, a specific deviation value of each segment matching and a corresponding template index location are recorded; an intermediate comparison result is generated by traversing and comparing all segments, while deviation distribution information of all segments in the comparison process is stored; then, the deviation values are simply counted and stored in a temporary cache area, and finally the preliminary matching analysis result is obtained;

corresponding comparison results of transmitted data to the dynamic authentication identifiers item by item based on the preliminary matching analysis result, calculating deviation values of the transmitted data and the dynamic authentication identifiers according to deviations using a formula:

$$R_m = \sqrt{\sum_{j=1}^{m} \left( \frac{|D_j - T_j|}{B_j} + \frac{A_j}{Z_j} \right)^2} ;$$

calculating a weighted deviation value between each set of parameters, screening matched data according to the deviation values, and generating a dynamic comparison result;

in which, $R_m$ represents the weighted deviation value between parameters, $D_j$ is a comparison value of received parameters, $T_j$ is a reference parameter value of the dynamic authentication identifier, $B_j$ is a weight parameter of a comparison group, $A_j$ is a comparison index bit identifier value, $Z_j$ is an adjustment coefficient of a dynamic comparison group, and m represents a total number of comparison parameters;

this formula has the following benefits: the correlation between the deviation and the template index is clarified through the introduction of the index identification value $A_j$, and the flexibility of group matching is improved through the introduction of the adjustment coefficient $Z_j$, so that the comprehensive deviation value can more accurately reflect the matching between parameters;

the transmission parameter comparison value $D_j = [3, 4, 6, 8]$, the dynamic authentication identifier reference value $T_j = [2, 5, 7, 9]$, the weight parameter $B_j = [1.2, 1.5, 1.1, 1.3]$, the index identifier value $A_j = [1, 2, 1, 2]$, and the adjustment coefficient $Z_j = [0.8, 1.0, 0.9, 1.2]$ are substituted item by item into the following formulas: calculating a deviation value for the first group of parameters:

$$R_{m1} = \sqrt{\left( \frac{|3-2|}{1.2} + \frac{1}{0.8} \right)^2} = \sqrt{\left( \frac{1}{1.2} + 1.25 \right)^2} = \sqrt{2.08^2} = 2.08 ;$$

calculating a deviation value for the second group of parameters:

$$R_{m2} = \sqrt{\left( \frac{|4-5|}{1.5} + \frac{2}{1.0} \right)^2} = \sqrt{\left( \frac{1}{1.5} + 2 \right)^2} = \sqrt{2.67^2} = 2.67 ;$$

calculating a deviation value for the third group of parameters:

$$R_{m3} = \sqrt{\left( \frac{|6-7|}{1.1} + \frac{1}{0.9} \right)^2} = \sqrt{\left( \frac{1}{1.1} + 1.11 \right)^2} = \sqrt{2.02^2} = 2.02 ;$$

calculating a deviation value for the fourth group of parameters:

$$R_{m4} = \sqrt{\left( \frac{|8-9|}{1.3} + \frac{2}{1.2} \right)^2} = \sqrt{\left( \frac{1}{1.3} + 1.67 \right)^2} = \sqrt{2.44^2} = 2.44 ;$$

the final calculation result is a comprehensive deviation value $R_m = [2.08, 2.67, 2.02, 2.44]$;

the results show that the comprehensive deviation value quantifies the matching degree between the transmitted parameters and the dynamic authentication identifiers, providing a basis for subsequent screening of highly matched data, while the accuracy and flexibility of the matching calculation process are optimized through weight and adjustment parameters; and

calling matching parameters in a dynamic comparison result, rearranging matched parameter values and index locations, and recording the arranged data in a dedicated storage area to obtain the authentication comparison record, wherein

firstly, parameter values that are highly matched with the dynamic authentication identifiers are screened, and a new comparison result table is generated from matching results according to the magnitudes of index values by reordering index information of matching values; during this process, a total deviation of the matching values in all the comparison results is calculated, then the total deviation is associated with a target group of the dynamic authentication identifiers, and non-matching parts in the transmitted parameters are further labeled; recursively traversing the comparison data ensures that all matching parameters are included in a final record; and the matched index values and parameter contents are combined into an ordered data structure to generate an authentication comparison record containing matching information and deviation distribution.

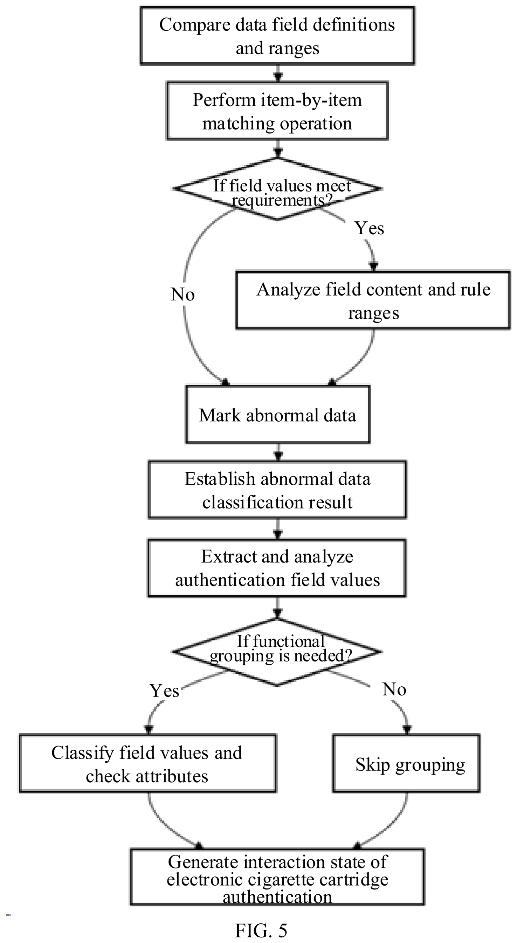

Referring to FIG. 5, the step of acquiring the interaction state of electronic cigarette cartridge authentication specifically includes:

comparing field definitions and ranges of data content based on the authentication comparison record, performing an item-by-item matching operation, checking whether a field value of each record meets field requirements, analyzing the field content of each record, performing a comparison operation on the field values and rule ranges, marking abnormal data, and establishing an abnormal data classification result, wherein

when the authentication comparison records are matched item by item, fields in each record are analyzed first to check whether field values meet a predefined field definition and data range, wherein each field has a clear format and range restriction, e.g., some fields only allow numerical data, while others require a target character sequence or date format; during item-by-item comparison, the field values are extracted and then compared with a set legal range in the field definition, e.g., the time fields are required within a certain date interval, and the numerical fields are required with a target range (e.g., 0 to 100); whenever a field value is found to not meet requirements, this record is marked as abnormal data; the reason for the abnormal data is further analyzed, the marking of the abnormal data is based on preset rules, which may be field values out of range, field format errors, or missing field data, etc.; after the abnormal data has been marked, the data is classified according to abnormality types, and the abnormal data classification result is established; for example, there are categories such as "numerical values out of range", "format mismatch" and "missing fields", and all abnormal data are classified according to their types into the corresponding category results, for subsequent processing and correction of the data;

extracting authentication field values based on the abnormal data classification result, analyzing classification functions for grouping according to the functions, classifying the field values and checking attributes thereof, and establishing an authentication element classification set, wherein

after the classification of abnormal data is completed, relevant field values in each authentication record are extracted, and specific functions and roles of the fields in the authentication process are analyzed; for example, some fields are used to identify a production batch of the cigarette cartridge, while some fields are used to verify the validity or uniqueness of the cigarette cartridge, and each field has a different role in authentication and is grouped according to its function; for example, the fields are categorized as "authentication fields", "validity fields" or "traceability information fields", and within each group, the field values are checked to verify whether the field values meet their attribute requirements in the authentication process; for example, for the authentication fields, it is necessary to verify whether the field values are consistent with stored identity information; for the validity fields, it is necessary to verify whether the validity fields meet an expiration date requirement of the cigarette cartridge; for the check result of each field group, if there is a problem with a field value (e.g., not matching expectations), it is marked as an abnormality, and the abnormal field values are combined with the classification results for targeted correction; after the field check is completed, the authentication element classification set is formed, which is grouped by functions and ensures that each field meets its functional requirements to ensure the accuracy and completeness of authentication;

mapping functional attributes and a use classification set based on the authentication element classification set, setting the interaction state according to a state transformation rule, integrating classification results of the interaction state, and generating the interaction state of electronic cigarette cartridge authentication, wherein

firstly, the functional attributes of the fields are mapped to the use classification set of the cigarette cartridges, including "consumer authentication", "security verification", "product traceability", etc.; the roles and objectives of authentication fields are determined according to different application scenarios; for example, for the "consumer authentication" function, some fields are responsible for verifying the user's identity, and for the "product traceability" function, the fields are used to record production information and sales circulation information of the cigarette cartridge; after the functional attributes are mapped to the use classification set, an interaction state is set according to a defined state transformation rule, wherein the state transformation rule specifies how the data changes in different states and how the changes affect the subsequent authentication operation; for example, when the authentication state of the cigarette cartridge is "Not Activated", users cannot proceed with verification, and the verification process can only continue once the state changes to 'Activated'; the classification results of different states are integrated, and the generation of interaction states includes state transformation relationships under different functions and use classifications so as to ensure that the transformations between the respective states are reasonable and executable; and finally, the interaction state of electronic cigarette cartridge authentication is generated for the interaction process in the anti-counterfeiting authentication process of the cigarette cartridge to ensure that the authentication data at each stage complies with predetermined rules, thereby improving the overall anti-counterfeiting efficiency.

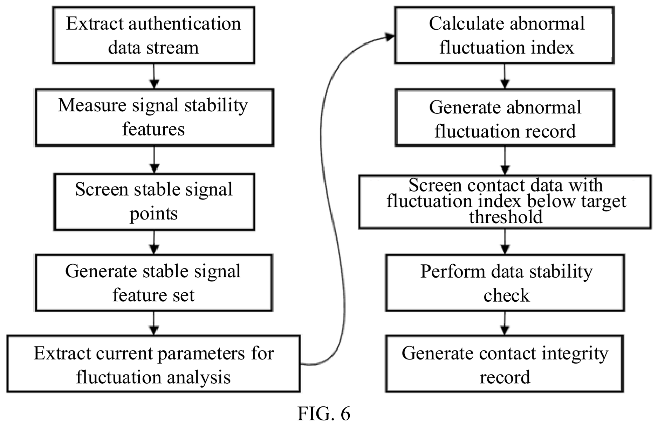

Referring to FIG. 6, the step of acquiring the contact integrity record specifically includes:

extracting an authentication data stream from the interaction state of the electronic cigarette cartridge authentication, measuring a signal stability feature of each data point, screening qualified stable signal points according to a set threshold range, and generating a stable signal feature set, wherein

based on a data stream signal in the interaction state of electronic cigarette cartridge authentication, the signal stability in each interval is analyzed by extracting data points in the signal interval one by one; an average value of all data points in the signal interval is calculated to characterize an overall signal level of this interval; secondly, signal peak and trough values within this interval are measured, and a signal fluctuation amplitude within this interval is acquired by calculating a difference between the signal peak and trough values; subsequently, the calculated signal average value is compared with a fluctuation amplitude, and also with a set stability threshold range; if the signal average value and the fluctuation amplitude are both in line with the threshold range, this interval is marked as a stable signal interval, otherwise this interval signal is eliminated; by eliminating signal data points that do not meet the threshold range, a data point set in the stable signal interval is screened, the data points are stored, and feature parameters of each interval are recorded to generate the stable signal feature set as an input data source for subsequent steps;

performing fluctuation analysis on current parameters extracted from the stable signal feature set using a formula:

$$Q = \frac{|C_{max} - C_{min}|}{V + \epsilon \cdot \left(\frac{1}{\sigma} - \tau\right)};$$

calculating an abnormal fluctuation index, and generating an abnormal fluctuation record;

in which, Q represents the abnormal fluctuation index, Cmax represents a maximum value of the current parameter, $C_{min}$ represents a minimum value of the current parameter, V is a baseline value of current change, $\epsilon$ is an adjustment coefficient, $\sigma$ is a standard deviation of current fluctuations, and $\tau$ is an adjustment threshold;

this formula has the following benefits: by increasing an adjustment baseline value and a standard deviation correction factor, the accurate quantification of signals with complex current fluctuations is achieved, while the sensitivity in the determination of abnormal fluctuations is increased;

a value of $C_{max}$ is taken as the maximum value of the current parameter, which is obtained by directly measuring the current peak of each interval among stable signal feature points, for example, the current peak of an interval is 3.2;

$C_{min}$ is the minimum value of the current parameter, which is acquired from a minimum current measurement point in the same interval, for example, the minimum value is 1.8;

V represents the baseline value, which is taken as 1.0 after an average value of a background current in the stable signal feature set is measured;

$\epsilon$ is the adjustment coefficient, which is dynamically set as 0.5 through signal noise analysis;

$\sigma$ is a standard deviation, which is taken as 0.6 after calculation based on signal fluctuation;

$\tau$ is the adjustment factor, which is related to an offset degree of a test signal, and taken as 0.2 after analysis;

the above values are substituted into the following formulas:

$$Q = \frac{|3.2 - 1.8|}{1.0 + 0.5 \cdot \left(\frac{1}{0.6} - 0.2\right)};$$

$$Q = \frac{1.4}{1.0 + 0.5 \cdot (1.6667 - 0.2)};$$

$$Q = \frac{1.4}{1.0 + 0.5 \cdot 1.4667};$$

$$Q = \frac{1.4}{1.0 + 0.73335};$$

$$Q = 0.8075;$$

the results show that the abnormal fluctuation index is 0.8075, and this value will be used as the basis for subsequent screening of abnormal fluctuation points, which are classified according to a set fluctuation threshold to generate the abnormal fluctuation record;

screening contact data with fluctuation index below a target threshold from the abnormal fluctuation record, performing stability check on the data, and updating the data through check to obtain the contact integrity record, wherein

connection states of contacts are verified one by one based on current data and signal characteristic data corresponding to each contact record; stability check is performed on the current signal in each contact data, and a change mean and a fluctuation amplitude of a contact signal are extracted; by comparing the mean and amplitude with a standard value range in the stable signal feature set, whether the contact meets a stability condition is determined; if the condition is met, an integrity state of the contact is recorded, otherwise the contact record is marked as "Abnormal" and this record is eliminated from a data set; next, the retaining contact data is further analyzed to ensure that the data meets an integrity requirement by checking the integrity of its data points and recording the consistency; and the contact data that passes the final check is integrated into an updated contact record set, and finally the contact integrity record is generated for subsequent analysis steps and verification links.

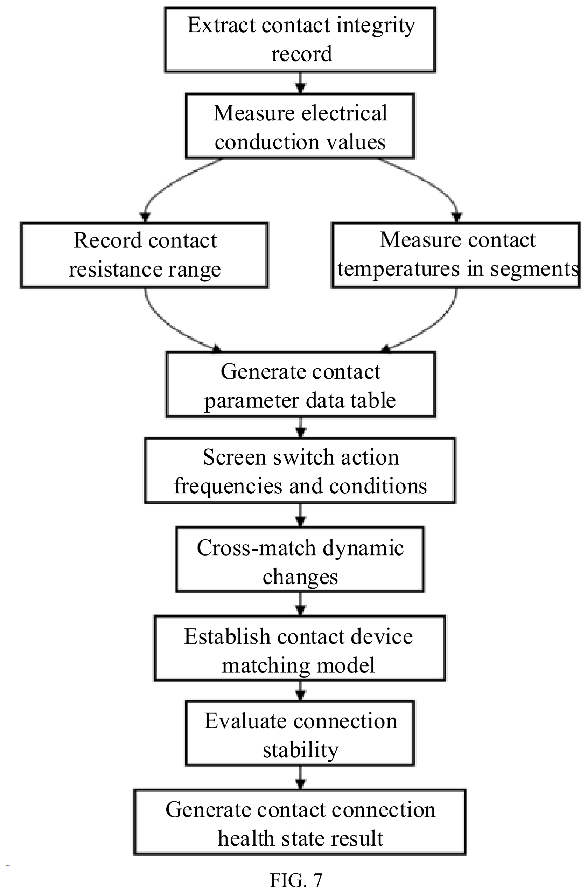

Referring to FIG. 7, the step of acquiring the contact connection health state result specifically includes:

extracting physical parameter values of contact connection parts based on the contact integrity record, measuring electrical conduction values point by point, recording an interval range of contact resistance values, and performing infrared sampling and segmented calculation on contact temperature distribution to acquire a contact parameter data table, wherein

firstly, physical parameter values of the contact connection parts are extracted from the record, the parameters including contact areas, shapes, materials, etc. of the contacts, wherein all physical parameters will affect the electrical conduction performance; for each contact connection part, point-by-point measurement is performed to check electrical conduction values; by testing the current conduction capability of each contact point, the electrical conduction value of each point is recorded; if the conduction value is low, it means that the contact is poor or the contact resistance is high, and the causes need to be further analyzed; the contact resistance values of the contacts are recorded, and classified according to an interval range; for example, the contact resistance needs to be within a target range (e.g., between 0.1 Ω and 0.5 Ω), beyond which it needs to be marked as "Abnormal"; the temperature distribution of the contacts is measured using an infrared sampling technology, and the temperature data is collected in different areas by infrared sensors, and subjected to segmented calculation; the temperature distribution is divided into several areas for more detailed analysis; for example, the areas with high temperatures indicate overload or poor contact, and all collected data are integrated into a contact parameter data table that includes key information such as electrical conduction values, contact resistance values and temperature distribution to provide the basis for subsequent analysis;

performing interval segmentation on a switch action frequency based on the contact parameter data table, calling load current values and performing cross-screening and matching with ambient temperature data, mapping dynamic changes of contact parameters, and generating a contact device matching model, wherein

firstly, a switch action frequency is segmented in intervals, and the impact of a switch use frequency on the contact performances is analyzed, wherein the switch action frequency is divided according to a use environment of the contacts and the requirements of electrical loads; for example, the contacts used at high frequency will experience more severe wear and temperature rise, so higher and lower frequency intervals need to be analyzed differently; load current values and ambient temperature data are called for cross-screening, wherein the strength of the load current and the ambient temperature will have an impact on the electrical conduction values and contact resistance of the contacts, and in combination with these two data items, cross-matching is performed to check the changes in contact performances under different loads and environments; through such screening, dynamic changes of the contacts under different operating conditions can be identified; according to the data, the dynamic changes of contact parameters are mapped, and how they change with the changes of use time and environmental conditions is analyzed to generate a contact device matching model, wherein this model can predict performance changes of the contacts based on specific load current, switch frequency, and ambient temperature, so as to predict a failure point or end-of-life moment of the device in advance;

analyzing a fluctuation law of the electrical conduction values and the contact resistance values based on the contact device matching model, calling a device operation state matching result and evaluating the stability of the contact temperature distribution, extracting parameters and analyzing the connection stability, and generating the contact connection health state result, wherein

firstly, a fluctuation law of the electrical conduction values and contact resistance values of the contacts is analyzed, wherein the electrical conduction values and the contact resistance values fluctuate with the use of the contacts, the load changes and the increase in temperature, and an excessive fluctuation means that there is a problem with the contacts; through the accumulation of historical data and the mapping of the model, a change trend of the conduction values and the contact resistance values is analyzed to determine which factors have the greatest impact on its fluctuation; a device operation state matching result is called to evaluate the stability of contact temperature distribution, wherein the operation state of the device directly affects a working environment of the contacts, especially the fluctuation of temperature has a significant impact on the conduction performances of the contacts; by matching with the operation state of the device, whether there is significant instability in the temperature distribution of the contacts is evaluated, and if the temperature fluctuates greatly, it is a precursor to device failure, which requires special attention; parameters are extracted for analysis of the stability of contact connections, especially the contact resistance and electrical conduction values of the connection parts; and whether the connection is in good condition is evaluated to generate the contact connection health result, wherein this result integrates the conduction performances of the conducts, contact resistance values, temperature distribution, and connection stability to evaluate whether the contacts can continue to operate safely or if they need to be replaced or maintained to ensure the long-term stability of the device.

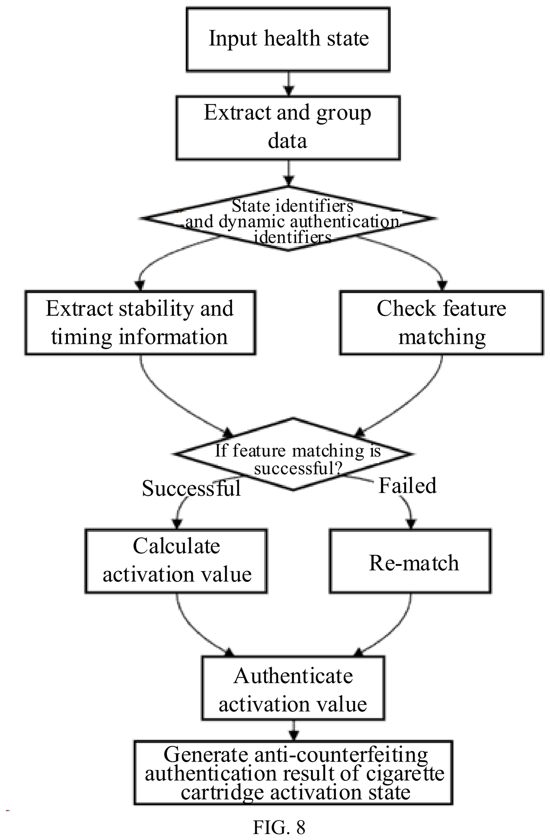

Referring to FIG. 8, the step of acquiring the anti-counterfeiting authentication result of the cigarette cartridge activation state specifically includes:

performing data extraction on the state identifiers and the dynamic authentication identifiers based on the contact connection health state result, grouping the extracted state identifiers and dynamic authentication identifiers in sequence, matching stability parameters of the state identifiers and extracting timing information of the dynamic authentication identifiers, and acquiring associated decryption input parameters, wherein

based on the contact connection health state result, the state identifiers and the dynamic authentication identifiers are subjected to data extraction; by parsing the contact health state data item by item, connection stability parameters (including current stability, connection duration and contact integrity parameters) corresponding to each state identifier are acquired; according to a stability parameter range of the state identifiers, identifier data that is abnormal or does not meet threshold conditions is eliminated, while time series data of the dynamic authentication identifiers is extracted and deconstructed into a timestamp sequence and authentication identification values; after completing preliminary parsing of the state identifiers and the dynamic authentication identifiers, the two sets of identifier data are matched using a timestamp correlation method; by comparing whether the timestamps are continuous and the data is valid, its matching accuracy is determined, and data points with matching failure or discontinuous timestamps are eliminated; finally, a combination of valid state identifiers and dynamic authentication identifiers is screened, and the associated decryption input parameters for a decryption operation are generated based on the matching integrity and timing accuracy as the basis for subsequent decryption steps;

performing step-by-step parsing according to the associated decryption input parameters and in combination with feature values of the authentication template using a formula:

$$Y = \sqrt{\frac{E \cdot \beta}{1 + \gamma \cdot F^2}};$$

analyzing the homogeneity of authentication features and template features, determining a matching degree through a homogeneity index, and generating a matching check record;

in which, Y is the homogeneity index, E is a feature matrix value of the decryption input parameter, $\beta$ is a weight value in the template features, $\gamma$ is a matching check adjustment coefficient, and F is a Euclidean distance between two sets of features;

this formula has the following benefits: by introducing weight adjustment parameters and nonlinear correction factors, the matching similarity between a decryption input feature matrix and features of the authentication template is optimized, especially in the case of uneven feature distribution, such that the accuracy and fault tolerance of matching are improved;

E represents a decryption input parameter feature matrix value, which is determined by numerical calculation by assembling various feature values obtained by decrypting the state identifiers and the dynamic authentication identifiers into a matrix, and set as 3.6;

β is a weight value of a feature vector in the authentication template, which is dynamically assigned according to the importance of key features in the template, and set as 0.8;

γ is a nonlinear correction coefficient, which is calculated according to an overall distribution law of two sets of feature deviations, and set as 1.2;

F is a Euclidean distance between two sets of feature vectors, which is calculated by the following formula:

$$F = \sqrt{(x_1 - y_1)^2 + (x_2 - y_2)^2 + \cdots + (x_n - y_n)^2};$$

in which, x and y are vector components corresponding to the decryption input parameters and template feature values, respectively, and a calculation distance is set as 2;

the above parameters are substituted into the following principal formulas:

$$Y = \sqrt{\frac{3.6 \cdot 0.8}{1 + 1.2 \cdot 2^2}};$$

$$Y = \sqrt{\frac{2.88}{1 + 1.2 \cdot 4}};$$

$$Y = \sqrt{\frac{2.88}{5.8}};$$

$$Y \approx 0.7046;$$

the results show that a similarity index of the matching check is 0.7046, which reflects a matching degree between the decryption input parameters and the features of the authentication template, and this similarity index is an important input parameter for subsequent activation value calculation, which will be further used to verify the activation state of the cigarette cartridge and ensure the accuracy and integrity of the anti-counterfeiting authentication result;

calculating a decrypted activation value according to the matching check record and in combination with the key of the cigarette rod device, using the homogeneity index of the check record as a basis for activation determination, transmitting the calculation result through a signal channel and recording an activation process state, and generating the anti-counterfeiting authentication result of the cigarette cartridge activation state, wherein

firstly, the decryption input parameters and the similarity index in the matching check record are called by means of the device key, and the decryption input parameters are transmitted to an activation calculation module; a key dynamic verification model is constructed by taking the similarity index as a weight input for activation calculation; key input values and activation signal parameters are compared one by one, and activation determination input values are generated dynamically by checking the legitimacy of the key input values and the consistency of decryption signal features; subsequently, device identification code data and state code data in a transmission path of the signal channel are extracted, parsed and transmitted to an activation state determination module; the state code and the key activation value are subjected to logically combinatorial calculation to parse the integrity of an activation signal; and finally, the activation state after decryption is recorded, the transmission integrity of the activation result is verified by the device, and the anti-counterfeiting authentication result of the cigarette cartridge activation state is generated in combination with final activation determination input values and check state codes, providing verification support for the anti-counterfeiting authentication link.

The above are only preferred embodiments of the present invention, and are not intended to limit the present invention in any form. A person skilled in the art may change or modify the disclosed technical content into equivalent embodiments of equivalent changes for other fields. However, without departing from the content of the technical solutions of the present invention, any simple amendments or equivalent changes and modifications made to the above embodiments based on the technical essence of the present invention still fall within the protection scope of the technical solutions of the present invention.

**Claims**

1. An anti-counterfeiting authentication system for an electronic cigarette cartridge based on an encryption technology, comprising:

    an authentication parameter capturing module, configured to, based on an identification code and an encryption key of a BM1A01 chip, extract check parameters and dynamic authentication identifiers for sorting and grouping operations, acquire initial authentication data, and perform associated value calculation and storage by combining the dynamic authentication identifiers with the identification code to acquire a dynamic authentication parameter set;
    a cigarette rod data transmission module, configured to, based on the dynamic authentication parameter set, transmit authentication data to a cigarette rod device using a unibus protocol, call a cigarette rod pre-storage template and compare the template with received data, screen a comparison result and associate the comparison result with the dynamic authentication identifiers, generate an authentication comparison record, check the data integrity and mark abnormal items, extract authentication elements for classification processing, and generate an interaction state of electronic cigarette cartridge authentication;
    a contact connection authentication module, configured to, based on the interaction state of electronic cigarette cartridge authentication, extract electronic cigarette cartridge authentication data, check signal stability values and match the signal stability values with current parameters, screen abnormal fluctuation points to obtain a contact integrity record, and record a correlation with a device state to form a contact connection health state result; and
    a key activation control module, configured to, based on the contact connection health state result, decrypt state identifiers and the dynamic authentication identifiers, perform matching check on a parsing result and an authentication template, calculate an activation value in combination with a key of the cigarette rod device and transmit the activation value through a signal channel, and generate an anti-counterfeiting authentication result of a cigarette cartridge activation state.

2. The anti-counterfeiting authentication system for an electronic cigarette cartridge based on an encryption technology according to claim 1, wherein the step of acquiring the initial authentication data specifically comprises:

    performing, based on the identification code and the encryption key of the BM1A01 chip, a segmentation operation and binary encryption in sequence on the identification code, performing an arithmetic operation on the encryption key and the segmented identification code, recording a segmentation index, verifying a correlation between the identification code and the encryption key, and generating verified encryption feature parameters;
    performing, based on the verified encryption feature parameters, segmented parity sorting, and after each segment is grouped, analyzing a weight matching relationship between groups and the encryption key using a formula:

$$S_k = \sum_{i=1}^{n} \left( F_i \cdot K_i + \frac{|W_i|}{P_i} \right);$$

    acquiring sorted feature group values;
    in which, $S_k$ represents the sorted feature group values, $F_i$ represents segment values of the encryption feature parameters, $K_i$ is a corresponding component of the encryption key, $W_i$ is a difference weight between the encryption feature parameter and the key, $P_i$ is a segmented parity weight index, and n represents a total number of encryption keys; and
    performing, based on the sorted feature group values, a multi-layer nested matching operation with dynamic authentication identifier values, updating a dynamic identifier index according to a comparison result and then performing a combination operation, and merging the dynamic identifiers and feature groups to acquire the initial authentication data.

3. The anti-counterfeiting authentication system for an electronic cigarette cartridge based on an encryption technology according to claim 2, wherein the step of acquiring the dynamic authentication parameter set specifically comprises:

extracting a numerical range and a character sequence based on the initial authentication data and the dynamic authentication identifiers, parsing timestamps and state identifiers in the dynamic authentication identifiers, matching the timestamps and the state identifiers in the same dimension, and generating a numerical correspondence table;

extracting character index information in the identification code based on the numerical correspondence table, parsing a numerical interval in a hierarchical structure of the identification code, calculating a weighted value with data in the numerical correspondence table in order, and performing normalization processing to acquire a weighted normalized parameter set; and

calling parameter data in the parameter set based on the weighted normalized parameter set, performing grouping aggregation on high-frequency numerical parts, performing sorting according to set priorities, merging the sorted parameter data, and generating the dynamic authentication parameter set.

4. The anti-counterfeiting authentication system for an electronic cigarette cartridge based on an encryption technology according to claim 3, wherein the step of acquiring the authentication comparison record specifically comprises:

extracting a complete data packet from a unibus protocol transmission configuration based on the dynamic authentication parameter set, parsing each set of data into a binary sequence according to a fixed frame structure, calling relevant parameters in the cigarette rod pre-storage template, performing bitwise segmented matching on the binary sequence, recording a result of each matching and a matching index location, and generating a preliminary matching analysis result;

corresponding comparison results of transmitted data to the dynamic authentication identifiers item by item based on the preliminary matching analysis result, calculating deviation values between the transmitted data and the dynamic authentication identifiers according to deviations using a formula:

$$R_m = \sqrt{\sum_{j=1}^{m} \left( \frac{|D_j - T_j|}{B_j} + \frac{A_j}{Z_j} \right)^2};$$

calculating a weighted deviation value between each set of parameters, screening matched data according to the deviation values, and generating a dynamic comparison result;

in which, $R_m$ represents the weighted deviation value between parameters, $D_j$ is a comparison value of received parameters, $T_j$ is a reference parameter value of the dynamic authentication identifier, $B_j$ is a weight parameter of a comparison group, $A_j$ is a comparison index bit identifier value, $Z_j$ is an adjustment coefficient of a dynamic comparison group, and m represents a total number of comparison parameters; and

calling matching parameters from the dynamic comparison result, rearranging matched parameter values and index locations, and recording the arranged data in a dedicated storage area to obtain the authentication comparison record.

5. The anti-counterfeiting authentication system for an electronic cigarette cartridge based on an encryption technology according to claim 4, wherein the step of acquiring the interaction state of electronic cigarette cartridge authentication specifically comprises:

comparing field definitions and ranges of data content based on the authentication comparison record, performing an item-by-item matching operation, checking whether a field value of each record meets field requirements, analyzing the field content of each record, performing a comparison operation on the field values and rule ranges, marking abnormal data, and establishing an abnormal data classification result;

extracting authentication field values based on the abnormal data classification result, analyzing classification functions for grouping according to the functions, classifying the field values and checking attributes thereof, and establishing an authentication element classification set; and

mapping functional attributes and a use classification set based on the authentication element classification set, setting the interaction state according to a state transformation rule, integrating classification results of the interaction state, and generating the interaction state of electronic cigarette cartridge authentication.

6. The anti-counterfeiting authentication system for an electronic cigarette cartridge based on an encryption technology according to claim 5, wherein the step of acquiring the contact integrity record specifically comprises:

extracting an authentication data stream from the interaction state of electronic cigarette cartridge authentication, measuring a signal stability feature of each data point, screening qualified stable signal points according to a set threshold range, and generating a stable signal feature set;

performing fluctuation analysis on current parameters extracted from the stable signal feature set using a formula:

$$Q = \frac{|C_{max} - C_{min}|}{V + \epsilon \cdot \left(\frac{1}{\sigma} - \tau\right)};$$

calculating an abnormal fluctuation index, and generating an abnormal fluctuation record;

in which, Q represents the abnormal fluctuation index, $C_{max}$ represents a maximum value of the current parameter, $C_{min}$ represents a minimum value of the current parameter, V is a baseline value of current change, $\epsilon$ is an adjustment coefficient, $\sigma$ is a standard deviation of current fluctuations, and $\tau$ is an adjustment threshold; and

screening contact data with fluctuation index below a target threshold from the abnormal fluctuation record, performing stability check on the data, and updating the data through check to obtain the contact integrity record.

7. The anti-counterfeiting authentication system for an electronic cigarette cartridge based on an encryption technology according to claim 6, wherein the step of acquiring the contact connection health state result specifically comprises:

extracting physical parameter values of contact connection parts based on the contact integrity record, measuring electrical conduction values point by point, recording an interval range of contact resistance values, and performing infrared sampling and segmented calculation on contact temperature distribution to acquire a contact parameter data table;

performing interval segmentation on a switch action frequency based on the contact parameter data table, calling load current values and performing cross-screening and matching with ambient temperature data, mapping dynamic changes of contact parameters, and generating a contact device matching model; and

analyzing a fluctuation law of the electrical conduction values and the contact resistance values based on the contact device matching model, calling a device operation state matching result and evaluating the stability of the contact temperature distribution, extracting parameters and analyzing the connection stability, and generating the contact connection health state result.

8. The anti-counterfeiting authentication system for an electronic cigarette cartridge based on an encryption technology according to claim 7, wherein the step of acquiring the anti-counterfeiting authentication result of the cigarette cartridge activation state specifically comprises:

performing data extraction on the state identifiers and the dynamic authentication identifiers based on the contact connection health state result, grouping the extracted state identifiers and dynamic authentication identifiers in sequence, matching stability parameters of the state identifiers and extracting timing information of the dynamic authentication identifiers, and acquiring associated decryption input parameters;

performing step-by-step parsing according to the associated decryption input parameters and in combination with feature values of the authentication template using a formula:

$$Y = \sqrt{\frac{E \cdot \beta}{1 + \gamma \cdot F^2}};$$

analyzing the homogeneity of authentication features and template features, determining a matching degree through a homogeneity index, and generating a matching check record;

in which, Y is the homogeneity index, E is a feature matrix value of the decryption input parameter, $\beta$ is a weight value in the template features, $\gamma$ is a matching check adjustment coefficient, and F is a Euclidean distance between two sets of features; and

calculating a decrypted activation value according to the matching check record and in combination with a key of the cigarette rod device, using the homogeneity index of the check record as a basis for activation determination, transmitting the calculation result through a signal channel and recording an activation process state, and generating the anti-counterfeiting authentication result of the cigarette cartridge activation state.

```
┌─────────────────────────┐              ┌─────────────────────────┐
│  Authentication parameter│              │   Contact connection    │
│     capturing module    │              │  authentication module  │
└─────────────────────────┘              └─────────────────────────┘
            │                                         │
  Extract identification code and          Check signal and current
         encryption key                          parameters
            │                                         │
            ▼                                         ▼
┌─────────────────────────┐              ┌─────────────────────────┐
│   Dynamic authentication │              │ Contact connection health state│
│      parameter set      │              │          result         │
└─────────────────────────┘              └─────────────────────────┘
            │                                         │
            ▼                                         ▼
┌─────────────────────────┐              ┌─────────────────────────┐
│     Cigarette rod data   │              │   Key activation control │
│    transmission module  │              │         module          │
└─────────────────────────┘              └─────────────────────────┘
            │                                         │
  Transmit authentication data            Generate activation state
            │                                         │
            ▼                                         ▼
┌─────────────────────────┐              ┌─────────────────────────┐
│ Interaction state of electronic cigarette│          │ Anti-counterfeiting authentication result│
│    cartridge authentication │              │ of cigarette cartridge activation state│
└─────────────────────────┘              └─────────────────────────┘
```

FIG. 1

Acquire identification code
and encryption key

Segment and encrypt
identification code

Operate with encryption key and
record segment index

Generate encryption
feature parameters

If sorting is needed?

Yes

No

Sort and group feature
parameters

Skip sorting

Analyze matching with weight
of encryption key

Matching with dynamic
authentication identifier
values

Update dynamic
identifier index

Merge dynamic identifiers and
feature groups

Acquire initial
authentication data

FIG. 2

```
┌─────────────────────────────┐
│  Extract numerical range and │
│     character sequence       │
└─────────────────────────────┘
              │
              ▼
┌─────────────────────────────┐
│  Parse timestamps and state  │
│         identifiers          │
└─────────────────────────────┘
              │
              ▼
┌─────────────────────────────┐
│    Generate numerical        │
│   correspondence table       │
└─────────────────────────────┘
              │
              ▼
┌─────────────────────────────┐
│   Extract character index    │
│ information in identification code │
└─────────────────────────────┘
              │
              ▼
┌─────────────────────────────┐
│   Parse numerical interval of │
│      identification code     │
└─────────────────────────────┘
              │
              ▼
        ╱─────────╲
       ╱ If weighted ╲
      ╱ calculation is ╲
      ╲   needed?     ╱
       ╲─────────────╱
   Yes  │           │  No
        ▼           ▼
┌──────────────┐ ┌──────────────┐
│ Perform weighted │ │ Skip weighted │
│  calculation  │ │  calculation  │
└──────────────┘ └──────────────┘
        │           │
        ▼           ▼
┌─────────────────────────────┐
│      Normalized              │
│      processing              │
└─────────────────────────────┘
              │
              ▼
┌─────────────────────────────┐
│  Perform high-frequency      │
│  numerical aggregation       │
└─────────────────────────────┘
              │
              ▼
┌─────────────────────────────┐
│      Sort by priorities      │
└─────────────────────────────┘
              │
              ▼
┌─────────────────────────────┐
│    Generate dynamic          │
│ authentication parameter     │
│           set                │
└─────────────────────────────┘
```

FIG. 3

```
┌─────────────────────┐
│ Extract complete data│
│      packet         │
└─────────────────────┘
          │
          ▼
┌─────────────────────┐
│ Parse data into binary│
│      sequence       │
└─────────────────────┘
          │
          ▼
┌─────────────────────┐
│  Perform bitwise    │
│ segmented matching  │
└─────────────────────┘
          │
          ▼
┌─────────────────────┐
│ Generate preliminary│
│ matching analysis result│
└─────────────────────┘
          │
          ▼
┌─────────────────────┐
│ Calculate deviation and│
│ weight deviation value│
└─────────────────────┘
          │
          ▼
        ◇ If matched data is
          screened? ◇
   Yes  ╱           ╲  No
       ▼             ▼
┌──────────────┐  ┌──────────────┐
│Screen matched│  │Skip screening│
│    data      │  │              │
└──────────────┘  └──────────────┘
       ╲             ╱
          ▼
┌─────────────────────┐
│  Generate dynamic   │
│ comparison result   │
└─────────────────────┘
          │
          ▼
┌─────────────────────┐
│ Record to dedicate  │
│   storage area      │
└─────────────────────┘
          │
          ▼
┌─────────────────────┐
│Generate authentication│
│ comparison record   │
└─────────────────────┘
```

FIG. 4

Compare data field definitions
and ranges

Perform item-by-item
matching operation

If field values meet
requirements?

Yes

No

Analyze field content and rule
ranges

Mark abnormal data

Establish abnormal data
classification result

Extract and analyze
authentication field values

If functional
grouping is needed?

Yes

No

Classify field values and
check attributes

Skip grouping

Generate interaction state of
electronic cigarette cartridge
authentication

FIG. 5

Extract authentication
data stream

↓

Measure signal stability
features

↓

Screen stable signal
points

↓

Generate stable signal
feature set

↓

Extract current parameters for
fluctuation analysis

Calculate abnormal
fluctuation index

↓

Generate abnormal
fluctuation record

↓

Screen contact data with
fluctuation index below target
threshold

↓

Perform data stability
check

↓

Generate contact integrity
record

FIG. 6

FIG. 7

Input health state

Extract and group data

State identifiers and dynamic authentication identifiers

Extract stability and timing information

Check feature matching

If feature matching is successful?

Successful

Failed

Calculate activation value

Re-match

Authenticate activation value

Generate anti-counterfeiting authentication result of cigarette cartridge activation state

FIG. 8

| Europäisches Patentamt / European Patent Office / Office européen des brevets | **EUROPEAN SEARCH REPORT** | Application Number EP 25 22 7161 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2022/032759 A1 (SHENZHEN CTECIC TECH CO LTD [CN]) 17 February 2022 (2022-02-17) * pages 6,7 * ----- | 1-8 | INV. H04L9/32 |
| X | EP 4 458 185 A1 (HUIZHOU HAPPY VAPING TECH LIMITED [CN]) 6 November 2024 (2024-11-06) * paragraph [0012]; figure 2 * ----- | 1-8 | |
| X | CN 113 312 606 B (SHENZHEN VAPEEZ TECH LTD) 28 April 2023 (2023-04-28) * paragraphs [0032] - [0051] * ----- | 1-8 | |

| TECHNICAL FIELDS SEARCHED (IPC) |
| --- |
| H04L |

The present search report has been drawn up for all claims

| Place of search | Date of completion of the search | Examiner |
| --- | --- | --- |
| Munich | 22 April 2026 | Billet, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7161

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | | Publication date | Patent family member(s) | | Publication date |
|---|---|---|---|---|---|
| WO 2022032759 | A1 | 17-02-2022 | CN | 114073340 A | 22-02-2022 |
| | | | WO | 2022032759 A1 | 17-02-2022 |
| EP 4458185 | A1 | 06-11-2024 | CA | 3243379 A1 | 14-05-2025 |
| | | | CN | 114365871 A | 19-04-2022 |
| | | | EP | 4458185 A1 | 06-11-2024 |
| | | | US | 2025380747 A1 | 18-12-2025 |
| | | | WO | 2023142496 A1 | 03-08-2023 |
| CN 113312606 | B | 28-04-2023 | NONE | | |

EPO FORM P0459

For more details about this annex : see Official Journal of the European Patent Office, No. 12/82